# Europäisches Patentamt

# European Patent Office

# Office européen des brevets

(19)

(11) Veröffentlichungsnummer: **0 236 820**
**B1**

(12) ## EUROPÄISCHE PATENTSCHRIFT

(45) Veröffentlichungstag der Patentschrift:
**25.07.90**

(51) Int. Cl.⁵: **A61C 1/00**

(21) Anmeldenummer: **87102436.0**

(22) Anmeldetag: **20.02.87**

(54) **Zahnärztlicher Instrumentenkopf.**

(30) Priorität: **05.03.86 DE 3607230**

(43) Veröffentlichungstag der Anmeldung:
**16.09.87 Patentblatt 87/38**

(45) Bekanntmachung des Hinweises auf die Patenterteilung:
**25.07.90 Patentblatt 90/30**

(84) Benannte Vertragsstaaten:
**AT CH DE FR IT LI**

(56) Entgegenhaltungen:
**EP-A- 0 109 507**
**AT-A- 280 466**
**US-A- 3 256 604**

(73) Patentinhaber: **Siemens Aktiengesellschaft,**
**Wittelsbacherplatz 2, D-8000 München 2(DE)**

(72) Erfinder: **Gonser, Reiner, Dipl.-Ing.(FH),**
**Überlingerstrasse 1, D-6800 Mannheim 61(DE)**
Erfinder: **Weber, Walter, Dipl.-Ing.(FH), Darmstädter**
**Strasse 278 A, D-6140 Bensheim(DE)**

EP 0 236 820 B1

ACTORUM AG

**Beschreibung**

Die Erfindung bezieht sich auf einen zahnärztlichen Instrumentenkopf mit einer Spannhülse zur Aufnahme eines Werkzeuges, mit getrennten Zufuhrkanälen für zwei fluide Medien (Luft, Wasser), mit einem am werkzeugseitigen Ende des Instrumentenkopfes abnehmbar angeordneten Einsatzteil, welches einen mit dem Zufuhrkanal des einen Mediums verbundenen, einseitig in radialer Richtung offenen Ringkanal aufweist, der mit einem Mediumkanal verbunden ist, dessen Austrittsöffnung auf das Werkzeug gerichtet ist, sowie mit ein oder mehreren, zwischen Kopfgehäuse und Einsatzteil angeordneten Ringdichtungselementen zur Abdichtung der Medienkanäle.

Bei den aus den Druckschriften AT-A 239 958, AT-A 280 446 und US-A 3 060 581 bekannten Instrumentenköpfen wird entweder nur ein Medium, meist Wasser, zur Kühlung der Präparationsstelle angeboten, oder es werden zwei Medien getrennt bis zu den Austrittsdüsen am werkzeugseitigen Ende des Instrumentenkopfes geführt. Letztere Anordnung hat den Nachteil, daß sich die Richtung des Spraystrahls nur schwer steuern, d.h. auf die Präparationsstelle ausrichten läßt und daß insgesamt die Sprayqualität zu wünschen übrig läßt.

Aus der genannten AT-A 280 446 ist es ferner bekannt, den Ringkanal, in den das eine Medium eingeleitet wird, entweder in axialer Richtung oder in radialer Richtung des Kopfgehäuses offen auszubilden und die Öffnung durch einen elastischen Gummidichtring abzudichten. Damit lassen sich die relativ engen Kanäle, insbesondere die Wasserkanäle, leichter reinigen.

Aus der US-A 3 256 604 ist eine Konstruktion eines Instrumentenkopfes bekannt, bei der beide Medien in einen als Mischkammer dienenden Ringkanal münden, von wo aus über ein oder mehrere Austrittskanäle die Medien in Form eines Gemisches (Spraystrahl) auf die Präparationsstelle gerichtet austreten können. Der Ringkanal wird gebildet durch zwei zueinander passende Ringkanalhälften, die einerseits im Kopfgehäuse und andererseits an einem stirnseitig dort aufgesetzten und fest mit diesem verbundenen Teil eingearbeitet sind. Solche Ringkanalhälften in den genannten Teilen einzuarbeiten, bedeutet einen vergleichsweise hohen Arbeitsaufwand. Ein weiterer Nachteil bei dieser Konstruktion ist darin zu sehen, daß keine Möglichkeit besteht, den Ringkanal und die in diesen einmündenden Medienkanäle zu reinigen. Darüber hinaus ist es bei dieser Konstruktion unbedingt notwendig, daß an der Stelle, an der der Zufuhrkanal der Luft in den Ringkanal einmündet, auch der Austrittskanal der Sprays vorhanden sein muß, weil nur bei dieser Zuordnung überhaupt ein Spraystrahl gebildet werden kann. Diese bei Montage der Teile einzuhaltende Zuordnung der Kanäle ist somit als weiterer Nachteil anzusehen.

Der im Anspruch 1 angegebenen Erfindung liegt die Aufgabe zugrunde, einen zahnärztlichen Instrumentenkopf der eingangs genannten Gattung dahingehend zu verbessern, daß unter Beibehaltung der an sich bekannten Austauschbarkeit des Einsatzteiles und der leichten Reinigung der innerhalb des Kopfgehäuses des Instrumentenkopfes verlaufenden Kanäle an der Medienaustrittsstelle stets ein gut durchgemischter, richtungsstabiler und in weiten Grenzen druckunabhängiger Medienstrahl erzielt werden kann und bei dem ferner eine Möglichkeit gegeben ist, ohne Änderung der konstruktiven Gegebenheiten den Instrumentenkopf in verschiedenen Varianten bezüglich der Anordnung der Austrittsdüsen anbieten zu können, so daß der Instrumentenkopf wahlweise mit Ein- oder Mehrdüsenspray-Abgabe ausgestattet werden kann.

Ein wesentlicher Vorzug des erfindungsgemäßen Einsatzteiles ist, daß es fertigungstechnisch bereits so vorbereitet ist, daß es universell verwendbar ist, insbesondere von Eindüsen- auf Mehrdüsenspray leicht nachgerüstet werden kann. Der Schlitz, der in Fortsetzung des vorhandenen Ringkanales vorgesehen ist, bildet an der Stelle, an der der Verbindungskanal des einen Mediums den Schlitz durchdringt, die Mischkammer. Diese liegt unmittelbar vor der Austrittsöffnung im Einsatzteil. Der Verbindungskanal selbst kann durch eine Bohrung oder durch ein im Einsatzteil eingefügtes, bis zur Mischkammer reichendes Röhrchen gebildet sein. Die Anordnung der Mischkammer unmittelbar vor der Austrittsöffnung am Kopfgehäuse hat dabei den Vorteil, daß eine besonders intensive Verwirbelung der Medien Wasser und Luft zu erzielen ist.

Besonders vorteilhaft ist es, die Mischkammer dadurch zu bilden, daß man in Erweiterung des Ringkanals einen Sägeschlitz oder dergleichen vorsieht, welcher von die Verbindungskanäle bildende Bohrungen durchdrungen wird. Vorzugsweise sind am Umfang des Einsatzteiles mehrere Schlitze und auch mehrere, diesen zugeordnete Bohrungen vorgesehen, wodurch sehr leicht eine Mehrdüsensprayabgabe geschaffen werden kann. Das Einsatzteil ist so konzipiert, daß es als funktionsfähiges Teil auf einem Drehautomaten hergestellt werden kann, wobei der Grundkörper (ohne Bohrungen) sowohl für Eindüsen- als auch für Zweidüsenanordnung gleich ist. Besonders vorteilhaft ist es, wenn die Eindüsenanordnung zwei eng benachbart angeordnete Einzelaustrittsöffnungen aufweist, weil dadurch bei einem Wechsel von Ein- auf Zweidüsenkopf im gesamten Spraysystem keine Druckänderung auftritt.

Ein Ausführungsbeispiel der Erfindung wird nachfolgend anhand der Zeichnung näher erläutert. Es zeigen:

Figur 1 einen zahnärztlichen Instrumentenkopf nach der Erfindung teilweise im Schnitt, in einer Zwei-Düsen-Sprayabgabe-Ausführung,

Figur 2 das in Figur 1 gezeigte Einsatzteil im Längsschnitt,

Figur 3 das in Figur 2 gezeigte Einsatzteil von unten gesehen,

Figur 4 eine Ausführungsform eines Einsatzteiles für eine Ein-Düsen-Sprayabgabe, ebenfalls von unten gesehen.

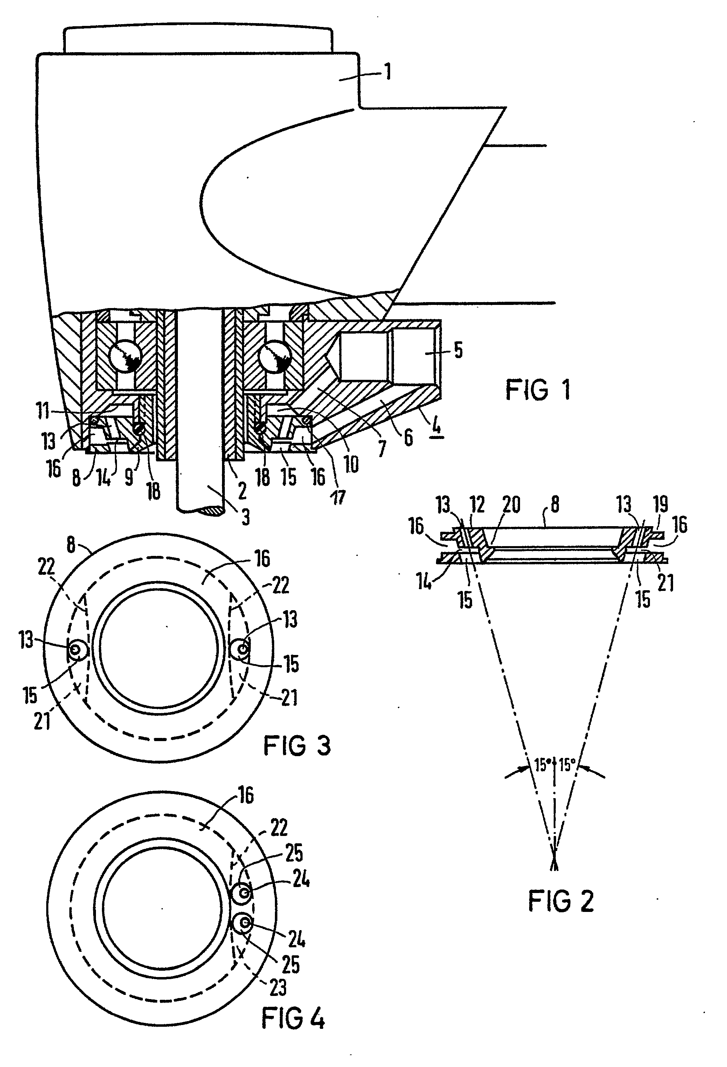

Die Figur 1 zeigt in einer Seitenansicht und teilweise im Schnitt einen zahnärztlichen Instrumentenkopf mit einem Kopfgehäuse 1, in dem in bekannter Weie eine Spannhülse 2 für ein rotierendes Werkzeug 3 gelagert ist. Nachdem die Ausbildung der Spannhülse für die Erfindung unwesentlich ist, wird darauf verzichtet, auf deren Konstruktion und Lagerung näher einzugehen.

Das Kopfgehäuse 1 ist mit einem seitlichen Ansatz 4 versehen, welcher eine zentrale Bohrung 5 sowie zwei von dieser abzweigende Zufuhrkanäle 6, 7 aufweist. Über die zentrale Bohrung 5 werden mittels eines nicht dargestellten Zapfens mit einerseits axialer und andererseits radialer Austrittsöffnung zwei fluide Medien (Luft, Wasser) getrennt herangeführt und in die Zuführungskanäle 6, 7 eingespeist. Am werkzeugseitigen Ende des Kopfgehäuses 1 ist ein Einsatzteil 8 mit Hilfe einer Schraubhülse 9 auswechselbar gehaltert. Das eine Medium, vorzugsweise Wasser, wird über den Zufuhrkanal 7 in einen Ringkanal 10 geleitet, der einerseits durch Gehäusewandungsteile 11 und andererseits durch die dem Werkzeug abgewandte Stirnfläche 12 des Einsatzteiles 8 gebildet wird. Vom Ringkanal 10 aus führen unter jeweils 15° Neigung zur Werkzeugachse zwei Bohrungen 13 zu einer Mischkammer 14, die unmittelbar vor den Austrittsöffnungen 15 für die beiden Medien liegt und zentrisch zu den Bohrungen 13 verläuft. Das andere Medium (Luft) wird über den Zufuhrkanal 6 in einen Ringkanal 16 geleitet, der durch eine Ausdrehung im Einsatzteil 8 gebildet ist. Zwei Dichtringe 17,18 sorgen einerseits für einen einwandfreien Sitz des Einsatzteiles im Kopfgehäuse und andererseits für eine Abdichtung sowohl der Kanäle gegeneinander als auch gegen Eindringen von Wasser in das Kopfgehäuse. Wie aus Figur 2, die das Einsatzteil 8 als Einzelteil im Längsschnitt zeigt, ersichtlich, ist das Einsatzteil zur Aufnahme der Dichtringe 17, 18 mit zwei Absätzen 19, 20 versehen.

Die Mischkammer 14 wird durch die Durchdringung der Bohrungen 13 mit eingefrästen Schlitzen 21 (Fig. 3) gebildet. Die Schlitze 21 sind durch einen Sägeschlitz od.dgl. gebildet, der sich in Verlängerung des Ringkanals 16 über den schraffiert angegebenen Flächenbereich erstreckt und dessen Radius durch die mit 22 bezeichnete gestrichelte Linie angegeben ist. Durch die beiden Sägeschlitze wird der Ringkanal 16 und damit das Medium Luft mit dem Ringkanal 10 über die Bohrungen 13 mit dem Medium Wasser verbunden. Wie bereits erwähnt, können anstelle der Bohrungen auch Röhrchen vorgesehen sein, die unmittelbar vor der Austrittsstelle in die Mischkammer 14 münden.

Das Einsatzteil 8 ist so konzipiert, daß es als funktionsfähiges Teil von einem Drehautomaten hergestellt werden kann, wobei der Grundkörper sowohl für die in den Figuren 1 bis 3 dargestellte Zweidüsenanordnung als auch für die in Figur 4 gezeigte Eindüsenanordnung gleich ausgebildet ist. Diese ist zweckmäßigerweise so ausgebildet, daß innerhalb des durch nur einen Sägeschlitz gebildeten Abschnittes 23 anstelle einer Bohrung und einer Austrittsöffnung (Pos. 13 und 15 in Fig. 3) nun dicht benachbart zwei Bohrungen 24 und zwei Austrittsöffnungen 25 vorgesehen sind. Eine solche Anordnung hat den Vorteil, daß bei einem Wechsel von Ein- auf Zweidüseninstrumentenkopf im Spraysystem keine Druckänderungen erfolgen.

Anstelle der gezeigten zwei Düsen können weitere Düsen am Umfang vorgesehen sein. Auch eine solche Ausführung läßt sich unter Beibehaltung des Grundkonzepts sehr leicht realisieren; es braucht hierzu lediglich an der gewünschten Stelle der erläuterte Sägeschlitz eingebracht zu werden.

Nachdem das Einsatzteil sehr leicht vom Kopfgehäuse trennbar ist, sind sämtliche Zuführungskanäle und Ringräume sehr leicht zu reinigen.

## Patentansprüche

1. Zahnärztlicher Instrumentenkopf, mit einer Spannhülse (2) zur Aufnahme eines Werkzeuges (3), mit getrennten Zufuhrkanälen (6, 7) für zwei fluide Medien (Luft, Wasser), mit einem am werkzeugseitigen Ende des Instrumentenkopfes ahnehmbar angeordneten Einsatzteil (8), welches einen mit dem Zufuhrkanal (6) des einen Mediums verbundenen, einseitig in radialer Richtung offenen Ringkanal (16) aufweist, der mit einem Medienkanal verbunden ist, dessen Austrittsöffnung (15) auf das Werkzeug (3) gerichtet ist, sowie mit ein oder mehreren, zwischen Kopfgehäuse (1, 11) und Einsatzteil (8) angeordneten Ringdichtungselementen (17, 18) zur Abdichtung der Medienkanäle, dadurch gekennzeichnet, daß der mit dem einen Medienzufuhrkanal (6) verbundene Ringkanal (16) in eine unmittelbar vor der Austrittsöffnung (15) des Einsatzteiles (8) angeordnete Mischkammer (14) mündet, in die ein mit dem anderen Mediumzufuhrkanal (7) verbundener Kanal (13) einmündet, und daß die Mischkammer (14) durch einen den Ringkanal (16) radial nach innen fortsetzenden Schlitz (21) gebildet ist.

2. Instrumentenkopf nach Anspruch 1, dadurch gekennzeichnet, daß der Schlitz (21) im Grundriß einen Abschnitt einer Kreisfläche bildet.

3. Instrumentenkopf nach Anspruch 2, dadurch gekennzeichnet, daß der Schlitz (21) durch eine Einfräsung gebildet ist.

4. Instrumentenkopf nach Anspruch 1, dadurch gekennzeichnet, daß am Umfang des rotationssymmetrisch ausgebildeten Einsatzteiles (8) mehrere, vorzugsweise zwei, Schlitze (21) vorgesehen sind.

5. Instrumentenkopf nach Anspruch 1, dadurch gekennzeichnet, daß die Austrittsöffnung (15) zentrisch zur Mischkammer (14) und zentrisch zu den Verbindungskanälen (13) angeordnet ist.

6. Instrumentenkopf nach Anspruch 1, dadurch gekennzeichnet, daß innerhalb der durch den Schlitz (21) begrenzten Fläche (22) zwei Verbindungskanäle (24) und zwei Austrittsöffnungen (25) dicht benachbart angeordnet sind.

7. Instrumentenkopf nach Anspruch 1, dadurch gekennzeichnet, daß die dem Mediumaustritt abgewandte Stirnfläche (12) des Einsatzteils (8) mit korrespondierenden Flächen (11) des Kopfgehäuses (1) einen weiteren Ringkanal (10) bildet, in den das andere Medium (W) eintritt, bevor es über die Verbindungskanäle (13) in die Mischkammer (14) geleitet wird.

8. Instrumentenkopf nach Anspruch 7, dadurch gekennzeichnet, daß das Einsatzteil (8) dem Medienaustritt abgewandt zwei Absätze (19, 20) aufweist, an denen Dichtringe (17, 18) zur Abdichtung der Medienkanäle (6, 7) gegenüber dem Kopfgehäuse (1) angeordnet sind.

9. Instrumentenkopf nach Anspruch 1, dadurch gekennzeichnet, daß das Einsatzteil (8) mit Hilfe einer konzentrisch zur Werkzeugaufnahmehülse (2) angeordneten Schraubhülse (9) am Kopfgehäuse (1) lösbar befestigt ist.

**Claims**

1. A dental instrument head having a clamp sleeve (2) for accommodating a tool (3) with separate supply channels (6, 7) for two fluid media (air, water), an insert part (8) arranged in a detachable manner on the tool side end of the instrument head, which part has an annular channel (16) connected to the supply channel (6) for one medium, open on one side in the radial direction, which annular channel is connected to a medium channel, the outlet (15) of which is directed to the tool (3), as well as one or more annular sealing elements (17, 18) arranged between housing of the head (1, 11) and insert part (8) for sealing the medium channels, characterised in that the annular channel (16) connected to the one medium supply channel (6) opens into a mixing chamber (14) arranged directly in front of the outlet (15) of the insert part (8), into which opens a channel (13) connected to the other medium supply channel (7) and in that the mixing chamber (14) is formed by a slot (21) continuing the annular channel (16) radially inwards.

2. An instrument head according to claim 1, characterised in that the slot (21) forms in cross-section a section of a circular surface.

3. An instrument head according to claim 2, characterised in that the slot (21) is formed by a milled recess.

4. An instrument head according to claim 1, characterised in that several slots (21), preferably two, are provided on the periphery of the insert part (8) which is constructed so as to be rotationally symmetrical.

5. An instrument head according to claim 1, characterised in that the outlet (15) is arranged centrally of the mixing chamber (14) and centrally of the connecting channels (13).

6. An instrument head according to claim 1, characterised in that within the surface (22) defined by the slot (21) two connecting channels (24) and two outlets (25) are arranged so that they are closely adjacent.

7. An instrument head according to claim 1, characterised in that the front surface (12) of the insert part (8) facing away from the medium outlet forms with the corresponding surfaces (11) of the head housing (1) a further annular channel (10), into which the other medium (W) enters, before it is led by way of the connecting channels (13) into the mixing chamber (14).

8. An instrument head according to claim 7, characterised in that the insert part (8) has two steps (19, 20) facing away from the medium outlet on which are arranged sealing rings (17, 18) for sealing the medium channels (6, 7) relative to the head housing (1).

9. An instrument head according to claim 1, characterised in that the insert part (8) is releasably secured on the head housing (1) with the aid of a screw sleeve (9) arranged concentrically to the tool installation sleeve (2).

**Revendications**

1. Tête d'instrument de dentisterie, comportant une douille de serrage (2) destinée à loger un outil (3), des canaux séparés d'amenée (6, 7) pour deux milieux fluides (air, eau), une pièce formant insert (8), qui est disposée de façon amovible sur l'extrémité, située du côté de l'outil, de la tête de l'instrument et comporte un canal annulaire (16) qui est relié au canal d'amenée (6) de l'un des fluides, est ouvert unilatéralement dans une direction radiale et est relié à un canal de circulation d'un fluide, dont l'ouverture de sortie (15) est dirigée sur l'outil (3), ainsi qu'un ou plusieurs éléments annulaires d'étanchéité (17, 18) disposés entre le boîtier (1, 11) de la tête et la pièce formant insert (8) et servant à fermer de façon étanche les canaux véhiculant les milieux, caractérisée par le fait que le canal annulaire (16) relié à un canal (6) d'amenée d'un milieu débouche dans une chambre de mélange (14), qui est située directement devant l'ouverture de sortie (15) de la pièce formant insert (8) et dans laquelle débouche un canal (13) relié à l'autre canal (7) d'amenée d'un milieu, et que la chambre de mélange (14) est formée par une fente (21) prolongeant radialement vers l'intérieur le canal annulaire.

2. Tête d'instrument suivant la revendication 1, caractérisée par le fait que la fente (21) forme, en projection horizontale, une section d'une surface conique.

3. Tête d'instrument suivant la revendication 2, caractérisée par le fait que la fente (21) est formée par fraisage.

4. Tête d'instrument suivant la revendication 1, caractérisée par le fait que plusieurs et de préférence deux fentes (21) sont prévues sur le pourtour de la pièce formant insert (8) à symétrie de révolution.

5. Tête d'instrument suivant la revendication 1, caractérisée par le fait que l'ouverture de sortie (15) est centrée par rapport à la chambre de mélange (14) et est centrée par rapport aux canaux de liaison (13).

6. Tête d'instrument suivant la revendication 1, caractérisée par le fait que deux canaux de liaison (24) et deux ouvertures de sortie (25) sont disposés à proximité les uns des autres dans la surface (22) limitée par la fente (21).

7. Tête d'instrument suivant la revendication 1, caractérisée par le fait que la surface frontale (12), tournée à l'opposé de la sortie du milieu, de la pièce formant insert (8) forme, avec des surfaces correspondantes (11) du boîtier (1) de la tête, un autre canal annulaire (10), dans lequel pénètre l'autre milieu (W) avant d'être envoyé dans la chambre de mélange (14) par l'intermédiaire des canaux de liaison (13).

8. Tête d'instrument suivant la revendication 7, caractérisée par le fait que la pièce formant insert (8) comporte, dans une position tournée à l'opposé de la sortie des milieux, deux parties saillantes (19, 20), sur lesquelles sont disposées des bagues d'étanchéité (17, 18) servant à étanchéifier les canaux (6, 7) véhiculant des milieux, par rapport au boîtier (1) de la tête.

9. Tête d'instrument suivant la revendication 1, caractérisée par le fait que la pièce formant insert (8) est fixée de façon amovible sur le boîtier (1) de la tête, au moyen d'une douille filetée (9) disposée concentriquement par rapport à la douille (2) logeant l'outil.

FIG 1

FIG 2

FIG 3

FIG 4